# EUROPÄISCHE PATENTSCHRIFT

(11) **EP 4 128 525 B1**
(45) Veröffentlichungstag und Bekanntmachung des Hinweises auf die Patenterteilung: **24.04.2024**
(21) Anmeldenummer: 21719540.3
(22) Anmeldetag: 25.03.2021
(51) Int. Cl.: H02S 20/00

(54) **SCHWIMMENDE PV-ANLAGE**
FLOATING PV SYSTEM
SYSTÈME PHOTOVOLTAÏQUE FLOTTANT

(30) Priorität: 26.03.2020 DE 102020108429
(43) Veröffentlichungstag der Anmeldung: 08.02.2023
(73) Patentinhaber: Winterhalder Selbstklebetechnik GmbH, 79423 Heitersheim (DE)
(72) Erfinder: VAN DE VEN, Marc, 5916 BD Venlo (NL)
(74) Vertreter: Patentanwälte Olbricht Buchhold Keulertz
(86) Internationale Anmeldenummer: PCT/EP2021/057858
(87) Internationale Veröffentlichungsnummer: WO 2021/191403

(56) Entgegenhaltungen:
- US-A1- 2008 029 148

## Beschreibung

Die vorliegende Erfindung betrifft eine schwimmende PV-(=Photovoltaik-) Anlage. Die vorliegende Erfindung betrifft auch ein Verfahren zur Herstellung einer solchen schwimmenden Photovoltaikanlage.

Schwimmende Installationen, z.B. Offshore, für PV-Anlagen erfordern spezielle Konstruktionen, um den enormen Kräften der Wellen standzuhalten. Um ein schwimmendes PV-Anlage verwenden zu können, z.B. für Offshore-Anwendungen, muss ein solches Anlage ausreichend stabil sein, um hohen Wellen und starken Winden standzuhalten. Insbesondere muss das Anlage ausreichend stabil sein, um ein Kentern und / oder Abdriften zu verhindern. Starre Schwimmkonstruktionen sind in der Regel zu teuer für die kommerzielle Nutzung von PV-Anlagen, insbesondere auf See.

Eine solche schwimmende Photovoltaikanlage ist aus der CN 206481252 U bekannt, die eine schwimmende Plattform offenbart, die mit Ballastgewichten versehen ist und ein starres Solarmodul umfasst, das indirekt auf der Plattform montiert ist. Die Plattform besteht aus einer schwimmenden Schaumbetonplatte und einem schwimmenden Stabilisierungsgefäß.

Die bekannte schwimmende Photovoltaikanlage weist daher vor dem Betrieb als Schwimmkörper ein relativ hohes Trockengewicht auf. Zusätzlich ist es erforderlich, die Anlagenstruktur mit den unter der Plattform hängenden Ballastgewichten zu stabilisieren.

Auch aus der US 2008 / 0 291 148 A1, die den am nächsten kommenden Stand der Technik darstellt, ist eine schwimmende Photovoltaikanlage bekannt, bei welcher Solarpaneele auf Gestellen montiert und die Gestelle ihrerseits mit Schwimmern versehen sind.

Es ist eine Aufgabe der vorliegenden Erfindung, die Nachteile des Standes der Technik zu überwinden oder zu verringern.

Diese Aufgabe wird gelöst durch eine schwimmende Photovoltaikanlage nach Anspruch 1. Vorteilhafte Ausgestaltungen sind in den Unteransprüchen beschrieben.

Die Aufgabe wird gelöst durch eine schwimmende Photovoltaikanlage mit einem Schwimmer und mindestens einem Photovoltaikmodul, wobei der Schwimmer eine obere Oberfläche aufweist, das Photovoltaikmodul an einer vorbestimmten Position auf der oberen Oberfläche angeordnet ist, der Schwimmer aus einem Schichtstapel aufgebaut ist, der Schichtstapel mindestens eine obere Schicht und eine untere Schicht umfasst, die obere Schicht eine erste Oberfläche aufweist, die an einer zweiten Oberfläche der unteren Schicht befestigt ist. Die untere Schicht besteht aus einem durchlässigen Schaumstoff, der Wasser aufnimmt. Die obere Schicht besteht aus einem nicht wasserdurchlässigen Schaumstoff.

Dies ergibt den Vorteil, dass die PV-Anlage mit einem Schwimmsockel in Art einer Schwimmmatratze versehen ist, der eine wasseraufnehmende untere Schicht aufweist. Wenn die PV-Anlage im Wasser schwimmt, befindet sich die wasserabsorbierende untere Schicht zumindest teilweise oder auch vollständig unter der Wasseroberfläche. Durch das aufgenommene Wasser erhält die PV-Anlage durch die untere Schicht ein erhöhtes Trägheitsmoment, während die obere Schicht kein Wasser aufnimmt, sondern für eine nach oben gerichtete Auftriebskraft teil eines geringen Eigengewichts der Schwimmer mit Wasser befüllt werden kann, bevor oder nachdem er in das Wasser eingesetzt wird. Einfacher ist es jedoch, die Umhüllungsfolie mit Löchern zu versehen oder in der Art anzuordnen, dass sich Lücken zwischen verschiedenen Folienabschnitten ergeben, so dass der Schwimmer automatisch Wasser aufnehmen kann, wenn er in das Wasser eingesetzt wird.

Gemäß einer Ausführungsform stellt die Erfindung die oben beschriebene schwimmende Photovoltaikanlage bereit, bei der der Schichtstapel von einer oder mehreren Folienhüllen umwickelt ist.

Gemäß einer weiteren Ausführungsform sieht die Erfindung vor, dass der Schichtstapel von einer Reihe von Folienhüllen umwickelt ist.

Wenn der Schwimmer auf See Wellen ausgesetzt ist, verformt er sich und krümmt sich. Durch die Verwendung nicht überlappender Folienhüllen kann eine Faltenbildung der Folien, die zum Reißen einer oder mehrerer Folien führen kann, verringert oder verhindert werden.

Gemäß einer Ausführungsform stellt die Erfindung die oben beschriebene schwimmende Photovoltaikanlage bereit, wobei ein Umfang des Schwimmers eine oder mehrere flexible Kupplungen umfasst.

Die eine oder die mehreren flexiblen Kupplungen können verwendet werden, um eine Anzahl von schwimmenden Photovoltaikanlagen miteinander zu verbinden, um eine schwimmende Insel von Photovoltaikanlagen zu bilden. Gemäß einer Ausführungsform sind die eine oder die mehreren flexiblen Kupplungen an der Wickelfolie oder der einen oder den mehreren Folienhüllen vorgesehen.

In einem Aspekt betrifft die Erfindung ein Verfahren zum Herstellen einer erfindungsgemäßen schwimmenden Photovoltaikanlage, umfassend:
- Bereitstellen einer ersten Schicht eines ersten Schaummaterials;
- Bereitstellen einer zweiten Schicht eines zweiten Schaummaterials;
- Auflegen einer Oberfläche der zweiten Schicht auf einer Oberfläche der ersten Schicht, um einen Schichtstapel zu erhalten;
- Bereitstellen einer Wickelfolie;
- Wickeln der Wickelfolie um den Schichtstapel, so dass die Oberflächen der ersten und zweiten Schichten aneinander haften,
- wobei die erste Schicht aus einem durchlässigen Schaummaterial besteht, das Wasser absorbieren kann,
- und die zweite Schicht aus einem nicht durchlässigen Schaumstoff besteht, der für Wasser nicht durchlässig ist.

Erfindungsgemäß umfasst die schwimmende Photovoltaikanlage ein auf einem Schwimmer montiertes Photovoltaikmodul. Der Schwimmer besteht aus einem zweischichtigen oder mehrschichtigen Körper, der einen Stapel aus einer oberen Schicht oder einem oberen Teil und einer unteren Schicht oder einer unteren Platte umfasst, wobei der Schichtstapel von einer Umhüllungsfolie umhüllt ist. Die obere und untere Schicht bestehen aus Kunststoff mit geringer Dichte, wobei die Dichte jeweils geringer ist als die Dichte von Wasser. Die obere Schicht besteht aus einem nicht durchlässigen Schaumstoff, der für Wasser nicht durchlässig ist. Die untere Schicht besteht aus einem durchlässigen Schaumstoff, der Wasser aufnehmen kann.

In einer Ausführungsform ist das undurchlässige Schaummaterial der oberen Schicht ein geschlossenzelliger Strukturschaum, wie z. B. geschlossenzelliges Polyurethan, expandiertes Polystyrol, Polyethylenschaum, Polypropylenschaum oder Neoprengummi. Das durchlässige Schaummaterial der unteren Schicht ist ein offenzelliger Strukturschaum, wie offenzelliges geschäumtes Polyurethan oder Latexschaumgummi. Alternative Ausgestaltungen, beispielsweise dreidimensional gewebte oder nicht gewebte und für Wasser durchlässige Materialien wie Wolle oder andere wasserabsorbierende Fasern können ebenfalls verwendet werden, um die untere Schicht aufzubauen.

In einer Ausführungsform weist das wasserabsorbierende Material der unteren Schicht eine hohe Porosität mit einer Porengrö-ße von ca. 1 mm und einer Dichte von ca. 30 kg/m³ und einer hohen Luftdurchlässigkeit von wenigstens 4.500 l/m² und typischerweise von ca. 4.500 l/m² auf. Die Luftdurchlässigkeit bezieht sich in diesem Zusammenhang darauf, dass Wasser in das Schaummaterial der unteren Schicht eindringen und dabei die Luft aus den Poren des Schaummaterials verdrängen kann.

Aufgrund der unterschiedlichen Materialien, die für die obere und die untere Schicht des Schwimmers verwendet werden, und da die untere Schicht im Gebrauch mit Wasser getränkt wird, weisen die Schichten eine unterschiedliche Flexibilität sowie unterschiedliche Ausdehnungs- und Kompressionskoeffizienten auf. Beispielsweise ist die untere Schicht im Vergleich zur oberen Schicht erheblich biegsamer und kann leichter gestaucht und gedehnt werden. Wenn sich der Schwimmer in Anpassung an den Wellengang abwechselnd konvex und konkav verformt, bleiben die Verformungen der oberen Schicht stets auf ein so geringes Maß begrenzt, dass die auf den Schwimmern montierten PV-Module nicht beschädigt werden.

Das betrifft einerseits starre PV-Module, die entweder direkt auf den Schwimmern montiert sein können, oder die an Gestellen montiert sein können, welche ihrerseits an den Schwimmern befestigt sind. Das betrifft andererseits flexible PV-Module, die direkt auf den Schwimmern montiert sein können, beispielsweise an den Wickelfolien der Schwimmer.

Um die beiden unterschiedlichen Schichten ohne Verwendung von Klebstoff zuverlässig zu einem Schwimmer zusammenzuhalten, werden die Schichten durch die Wickelfolie umhüllt und miteinander umwickelt.

In einer Ausführungsform ist die verwendete Wickelfolie eine Ethylen-Vinylacetat-Folie (EVA-Folie), es kann jedoch auch alternativ eine Polyvinylchlorid-Folie (PVC-Folie) verwendet werden. Beide Arten von Folienmaterialien können durch eine Schweißtechnik wie thermisches Schweißen oder chemisches Schweißen oder aber möglicherweise auch rein mechanisch, wie z. B. durch Nähen an sich selbst befestigt, also miteinander verbunden werden, wodurch Klebstoff oder andere Befestigungsmittel vermieden werden.

In einer beispielhaften Ausführungsform beträgt die Breite der oberen und unteren Schichten jeweils ungefähr 2 m und die Länge ist ein Vielfaches der Breite, hier z.B. 12 m, wobei die obere Schicht als Platte mit einer Dicke von ungefähr 10 cm und die untere Schicht als Platte mit einer Dicke von ungefähr 0,5 m bis 1 m ausgestaltet ist.

Ausführungsbeispiele der Erfindung werden nachfolgend anhand der rein schematischen Darstellungen beschrieben. Dabei zeigt
- Fig. 1: eine Insel mit schwimmenden Photovoltaikanlagen auf See,
- Fig. 2: einen Querschnitt einer schwimmenden Photovoltaikanlage,
- Fig. 3: eine Wickelfolienschicht in einer Reihe von Folienschläuchen, deren Ränder sich nicht überlappen,
- Fig. 4: eine Wickelfolienschicht, die eine Folienhülle in Längsrichtung von einer Seite zur anderen und von der Oberseite des Systems zeigt,
- Fig. 5: eine Wickelfolienschicht, die eine Folienhülle in der Länge des Systems von Seite zu Seite und von unten zeigt,
- Fig. 6: eine Seitenansicht einer schwimmenden Anlage, mit Verbindungsmitteln,
- Fig. 7: eine Seitenansicht einer schwimmenden Photovoltaikanlage, mit Anschlussmitteln,
- Fig. 8: ein erstes Ausführungsbeispiel mit starren Photovoltaikmodulen, und
- Fig. 9: ein zweites Ausführungsbeispiel mit starren Photovoltaikmodulen.

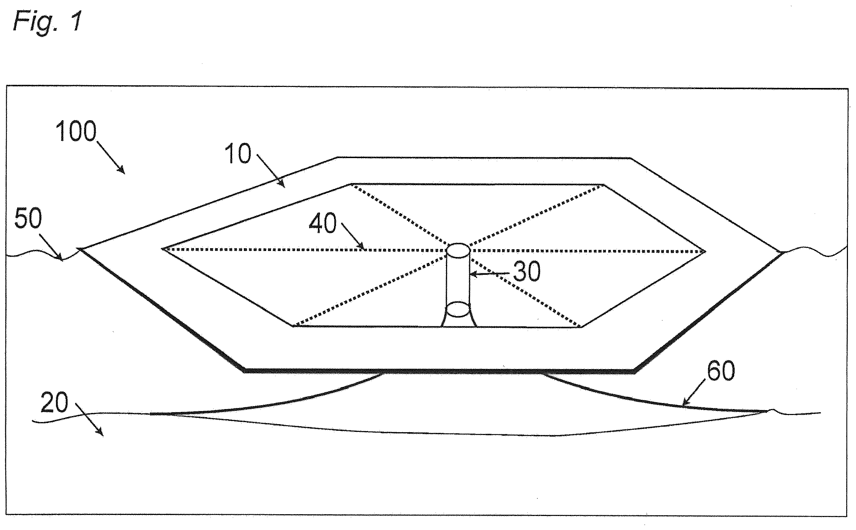

Fig. 1 zeigt in einer perspektivischen Ansicht schräg von oben eine Insel 100 von schwimmenden Photovoltaikanlagen 10 einer ersten Ausführungsform auf See. Bei dem dargestellten Ausführungsbeispiel sind sechs schwimmende Photovoltaikanlagen 10 zur Schaffung der Insel 100 miteinander verbunden. Die Insel 100 von sechs schwimmenden Photovoltaikanlagen 10 schwimmt auf einer Wasseroberfläche 50 und ist über eine zentrale, schwimmende Spindel 30 an einem Meeresboden 20 verankert. Neben der als Festmacher dienenden Spindel 30 ist sind auch Stromkabel 40 mit der Insel 100 verbunden, um den Transport erzeugter Energie von der schwimmenden Photovoltaikanlage 10 ans Ufer zu ermöglichen. Verankerungsmittel, wie sie dem Fachmann bekannt sind, beispielsweise In Form von Ankerleinen 60 oder Bojen, können ebenfalls verwendet werden, um die Insel 100 zu verankern.

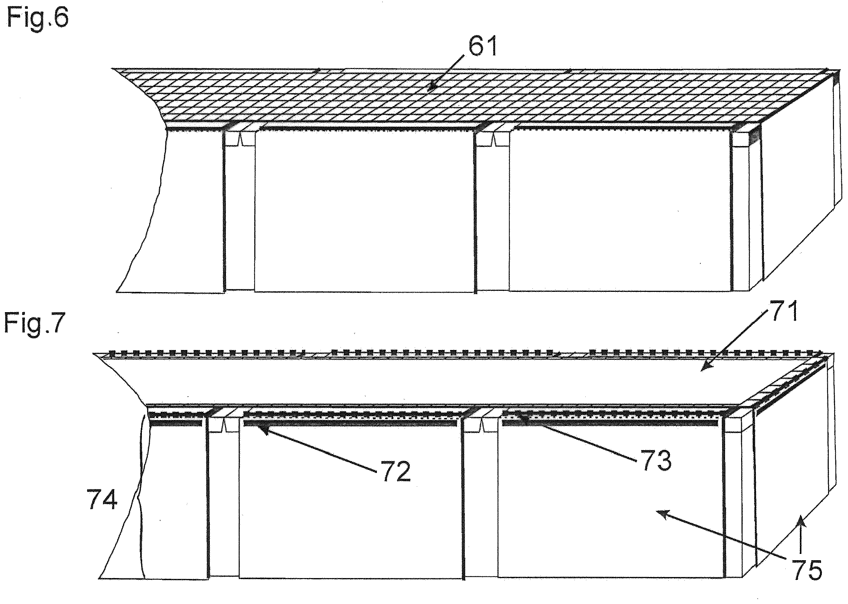

Die schwimmenden Photovoltaikanlagen 10 schwimmen teilweise auf der Wasseroberfläche 50, während sie ebenfalls teilweise untergetaucht sind. Infolgedessen liegt das Trägheitsmoment der Photovoltaikanlagen 10 unterhalb der Wasseroberfläche 50, wodurch eine stabile Strömung gewährleistet und ein Abdriften der Anlagen verhindert wird. Weiterhin wird die Form der schwimmenden Photovoltaikanlagen 10 der (eingestellten) Wellenform der Wasseroberfläche 50 etwas ähnlich. Die verformbare, teilweise schwimmende Struktur der schwimmenden Photovoltaikanlage 10 wird unter Bezugnahme auf Fig. 6 näher erläutert.

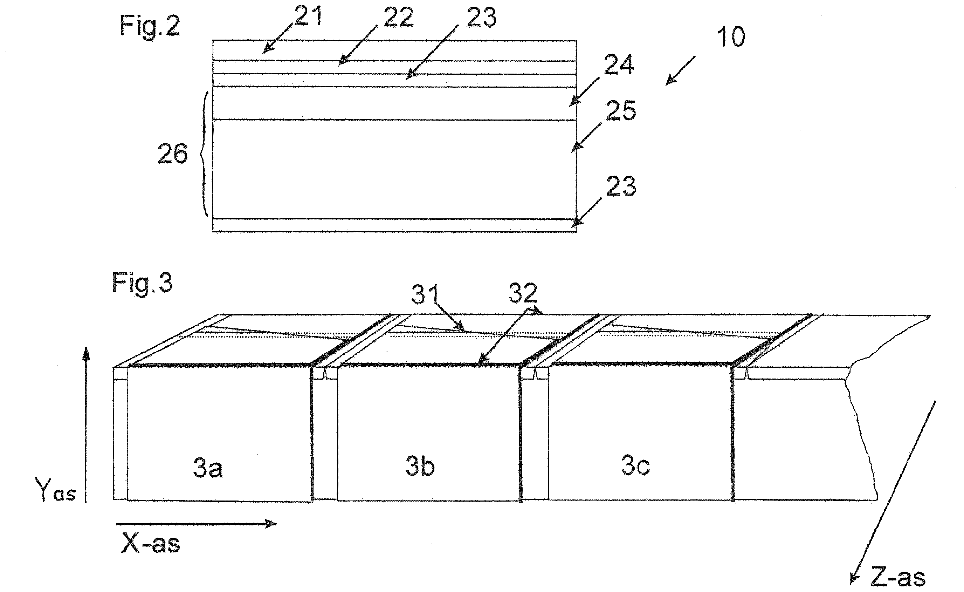

Fig. 2 zeigt einen Querschnitt einer schwimmenden Photovoltaikanlage 10 gemäß einer Ausführungsform, mit einem flexiblen Photovoltaikmodul 21, einer Trägerfolie 22, einer Wickelfolie 23 und einem Schwimmer 26, der seinerseits eine obere Schicht 24 und eine untere Schicht 25 aufweist. Die obere Schicht 24 und die untere Schicht 25 des Schwimmers 26 sind jeweils als rechteckige Platte ausgestaltet, wobei eine horizontale Breite und Länge größer ist als die in Fig. 2 gezeigte vertikale Dicke. Die unteren und oberen Schichten 24 und 25 sind 23übereinander gestapelt und bilden, durch die Wickelfolie 23 zusammengehalten, einen Schwimmer 26.

Die obere Schicht 24 gibt der schwimmenden Photovoltaikanlage 10 Auftrieb, so dass die obere Schicht 24 im Wesentlichen über der Wasseroberfläche 50 schwimmt. Zu diesem Zweck ist die obere Schicht 24 aus einem nicht durchlässigen schwimmenden Material aufgebaut, das nicht wasserdurchlässig ist.

Die Wickelfolie 23 wird um die Außenflächen der meisten, vorzugsweise aller, gestapelten Schichten 24 und 25 aufgebracht. Ein Wasseraustausch zwischen der unteren Schicht 25 und dem umgebenden Wasser ist möglich; die Wickelfolie 23 deckt die Schichten nicht vollständig ab, sondern etwa 80% ihrer Oberfläche. Infolgedessen verursacht die Wickelfolie 23 kaum eine Verzögerung des in die Anlage 10 und aus der Anlage 10 strömenden Wassers, wodurch das Trägheitsmoment der Anlage 10 unter der Wasseroberfläche 50 gehalten wird.

Beim Aufbringen der Wickelfolie 23 ist darauf zu achten, dass die Flexibilität der Paneele nicht über die Mindestflexibilität hinaus beschränkt wird, die erforderlich ist, um während des Gebrauchs ein Trägheitsmoment unter der Wasseroberfläche aufrechtzuerhalten. Das zu diesem Zweck verwendete Verpackungsverfahren wird nachstehend unter Bezugnahme auf die Fig. 3, 4 und 5 beschrieben. Diese Verpackungsmethode kann in mehrere Richtungen angewendet werden, um sicherzustellen, dass die Paneele in mehrere Richtungen flexibel sind.

Die Trägerfolie 22 ist entsprechend der Größe der Oberseite der oberen Schicht 24 ausgebildet und fest an der Wickelfolie 23 angebracht. Diese Verbindung kann durch Schweißen oder Nähen der Lagen erreicht werden.

Alternativ kann die Trägerfolie 22 entweder als integrierte Folienschicht und / oder derart in die Wickelfolie 23 integriert sein, dass die Wickelfolie 2. 3 die Funktionalität der Trägerfolie 22 hat, das heißt die Wickelfolie 23 wird auch als Trägerfolie verwendet. In diesem Fall kann eine separate Trägerfolie entfallen.

Das flexible Photovoltaikmodul 21 ist mit einem Butylentyp auf der Trägerfolie 22 befestigt. Dadurch wird ermöglicht, das Photovoltaikmodul 21 zu warten und zu ersetzen, ohne den Schwimmer 26 aus dem Wasser zu heben. Im Gebrauch hat die untere Schicht 25 Wasser absorbiert und das Gewicht der unteren Schicht 25 hat sich durch die Wasseraufnahme in der Schicht 25 deutlich erhöht.

Alternativ kann das Photovoltaikmodul 21 über einen alternativen lösbaren, beispielsweise mechanischen Anschluss wie Schrauben, Reißverschlüsse, einem Häkchen- oder "Klett"-Verschluss, oder mit Kleber an der Trägerfolie 22 befestigt werden. Alternativ können Laschen oder Streifen aus einem verschweißbaren Material vorgesehen sein, die entweder als separate Elemente, z. B. als "Anschweißstreifen", an der Trägerfolie 22 befestigt werden, z. B. angeschweißt werden, oder die Laschen können durch überstehende Abschnitte der Trägerfolie 22 gebildet sein. Darüber hinaus kann anstelle des flexiblen Photovoltaikmoduls 21 ein starres Modul wie ein auf die Trägerfolie 22 aufgebrachtes Gerüst verwendet werden, wobei eine flexible Kupplung zwischen dem Modul und dem Schwimmer 26 vorhanden ist, damit sich der Schwimmer 26 unabhängig von dem starren Modul entsprechend der Wasseroberfläche 50 verformen kann. Mehrere Photovoltaik-Module können auf einem Schwimmer 26 der schwimmenden Photovoltaikanlage 10 verwendet werden.

Fig. 3 zeigt schematisch, dass die Wickelfolie 23 in einer Reihe von Folienhüllen 3a, 3b, 3c, und noch weitere darüber hinaus, angeordnet ist, wobei die Kanten der Folienhüllen 3a, 3b, 3c sich nicht überlappen, sondern genügend große Zwischenräume zwischen sich frei lassen, damit sich die Schaumelemente bewegen, insbesondere verformen lassen. Die Folienhüllen 3a, 3b, 3c werden jeweils unter (Vor-)Spannung zusammengehakt, wie bei 31 angedeutet, so dass beide Enden auf der Oberseite 32 liegen und dann chemisch übereinander laminiert werden, wobei jede Folienhülle 3a, 3b, 3c eine geschlossene ringförmige Folie bildet, in der die Wicklungsrichtung parallel zur in Fig. 3 eingezeichneten Z-Achse verläuft. Die einzelnen Folienhüllen 3a, 3b, 3c haben jeweils eine Bewegungsfreiheit relativ zueinander in Richtung der in Fig. 3 eingezeichneten X-Achse.

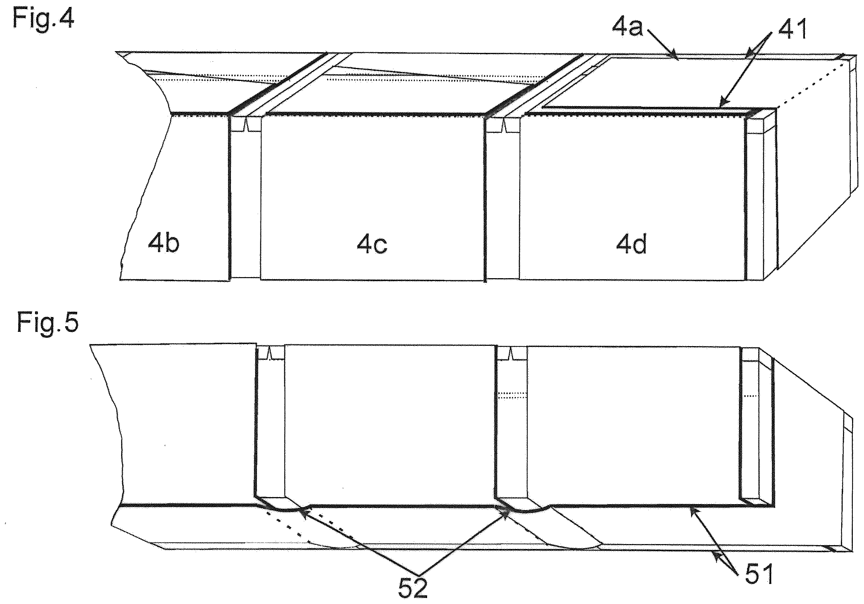

Fig. 4 und 5 zeigen eine zusätzliche Schicht 4a der Wickelfolie 23, wobei die Wicklungsrichtung parallel zur X-Achse verläuft. Diese Schicht 4a ist fest mit der letzten Folienhülle aus jeder Reihe von Folienhüllen, hier Folienhülle 4d, verbunden, sowohl oben, wie aus Fig. 4 ersichtlich, als auch unten, wie in Fig. 5 anhand der dortigen Unterseite 51 ersichtlich. Parallel zur X-Achse wird diese zusätzliche Schicht 4a des Wickelfilms 23 dann immer an der nächsten Folienhülle 4c, 4b, befestigt, wobei die zusätzliche Schicht 4a unten verläuft, aber locker zwischen den Folienhüllen hängt, wie in Fig. 5 bei 52 gezeigt, und zwar so, dass die notwendige Bewegungsfreiheit möglich ist, wie anhand von Fig. 6 näher erläutert wird.

Fig. 6 zeigt den gesamten Auftriebskörper, auf dem entlang der X-Achse eine Abschluss- oder Endfolie 61 befestigt ist, die immer an jeder Wickelfolie befestigt ist, entweder an den in Fig. 4 und 5 gezeigten beiden Enden, parallel zur X-Achse, oder an den in Fig. 3 gezeigten zweiten bis zur vorletzten Folienhüllen parallel zur Z-Achse. Die Endfolie 61 sorgt für eine stabile Schicht, die nicht durch Dehnung, Stauchung oder Schrumpfung beeinflussbar ist, also keine Verformung in Richtung der X- oder Z-Achse zulässt, sondern die in Y-Achsenrichtung gut verformbar ist. Da der gesamte Block oben starr ist, wird der Block darunter verlängert und verkürzt, d.h. die Biegelinie wird durch dieses Verhalten von der Mitte des gesamten Blocks nach oben verschoben. Dadurch können auf der so erhaltenen Oberfläche PV-Elemente platziert werden, ohne diese Elemente Kräften in der Ebene auszusetzen, die durch die X- und Z-Achse gebildet wird.

Fig. 7 zeigt das Auftriebssystem mit einem Photovoltaikmodul 21, welches bei diesem Ausführungsbeispiel als Dünnschicht-PV-Element 71 ausgestaltet ist. Dies ist eine der Methoden, wie ein PV-Element 21 montiert werden kann. Darüber hinaus können an der schwimmenden Photovoltaikanlage 10 in einer Ausführungsform Verbindungselemente 72 und 73 montiert werden. Die Photovoltaikanlage 10 wird mit einem Schwimmer gezeigt, der bei diesem Ausführungsbeispiel mit 74 gekennzeichnet ist, und in einer Wickelfolie 75 gezeigt, an welcher oben das Dünnschicht-Photovoltaikelement 71 befestigt ist. Darüber hinaus wird gezeigt, dass die Anlage Verschlusselemente eines Häkchenverschlusses aufweist, die in Form der Streifen 72 verlaufen. Mit diesen Streifen 72 kann die Anlage an eine oder mehrere zusätzliche Anlagen angeschlossen werden, um eine schwimmende Photovoltaikinsel zu bilden, wie in Fig.1 gezeigt. Andere Verbindungen alternativ zu den Häkchenverschluss-Streifen 72 und den damit zusammenwirkenden Gegenstreifen (Häkchen- und Flauschteile) sind dem Fachmann bekannt und können beispielsweise Haken- und / oder Lippenverbindungen, Kabelverbindungen und dergleichen umfassen, wie durch die gepunkteten Linien 73 angedeutet ist.

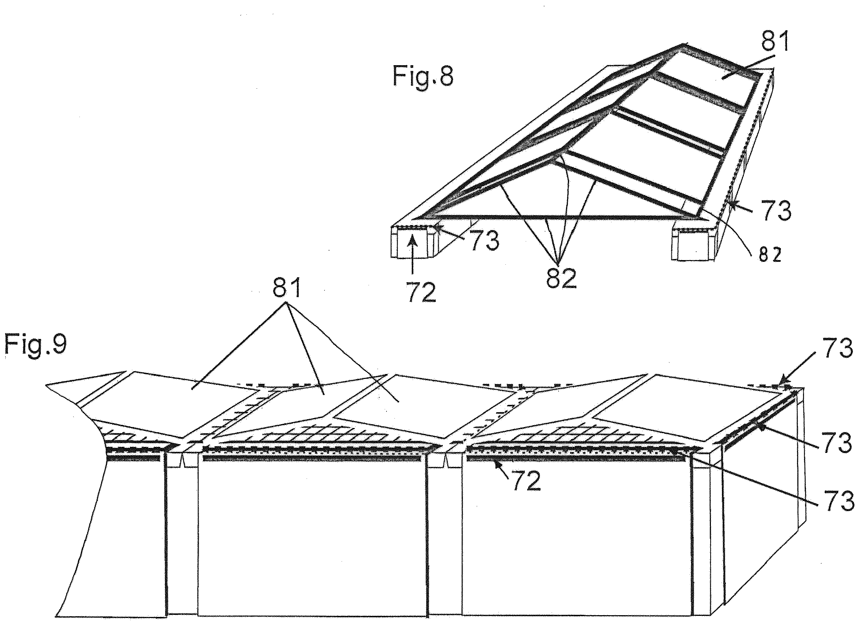

Fig. 8 zeigt ein Ausführungsbeispiel einer schwimmenden Photovoltaikanlage, die zum Einsatz auf vergleichsweise ruhigen Binnengewässern vorgesehen ist wie z.B. auf Teichen oder Seen. Da auf diesen Gewässern keine hohen Wellen zu erwarten sind, kann die Photovoltaikanlage starre Photovoltaikelemente 81 auf Basis von Halbleitersubstrat aufweisen und ist nicht darauf angewiesen, dass die Photovoltaikelemente in sich flexibel sind wie die Dünnschicht-Photovoltaikelemente 71. Die Schwimmer sind bei dem Ausführungsbeispiel der Fig. 8 in Form zweier Linien angeordnet und dienen dazu, ein aus mehreren Streben 82 aufgebautes Gestell zu tragen, an welchem wiederum die Photovoltaikelemente 81 befestigt sind. Das Gestell ist verwindungssteif ausgestaltet, so dass die starren Photovoltaikelemente 81 nicht in einem schädlichen Ausmaß auf Biegung, Torsion oder auf ähnliche Verformungen beansprucht werden.

An den beiden schmalen Stirnseiten sowie auf jeder nach außen weisenden Längsseite einer Linie von Schwimmern sind die Schwimmer mit den bereits erwähnten Verbindungselementen versehen, um die in Fig. 8 dargestellte Photovoltaikanlage mit anderen, gleichartigen Photovoltaikanlagen zu einer größeren Insel verbinden zu können. Dementsprechend weist die dargestellte Photovoltaikanlage Streifen 72 als eine erste Komponente eines Häkchenverschlusses auf sowie weitere Verbindungselemente 73, die beispielsweise in Form eines Reißverschlusselements ausgestaltet sein können.

Fig. 9 zeigt ein weiteres Ausführungsbeispiel einer schwimmenden Photovoltaikanlage mit starren Photovoltaikelementen 81, wobei diese Photovoltaikanlage zum Einsatz auf der See vorgesehen ist. Aufgrund des zu erwartenden Seegangs, der höhere Wellen als auf einem Binnengewässer erzeugt, sind bei diesem Ausführungsbeispiel die Photovoltaikelemente 81 jeweils in der Art auf den Schwimmern angeordnet, dass zwischen benachbarten Photovoltaikelementen 81 eine Art Scharnierlinie geschaffen wird, so dass sich die Schwimmer wie beschrieben durchbiegen können, in Anpassung an die Wellen, ohne dass sich die einzelnen Photovoltaikelemente 81 in sich verformen müssen.

Bei dem dargestellten Ausführungsbeispiel der Fig. 9 sind jeweils zwei Photovoltaikelemente 81 ähnlich wie ein Satteldach, also wie ein umgedrehtes V, angeordnet, und zwischen zwei derartigen, benachbarten Anordnungen verbleibt ein Freiraum, der wie eine Scharnierlinie wirkt, so dass die beiden benachbarten jeweils dachförmigen Anordnungen relativ zueinander bewegt werden können, wenn sich die Schwimmer verformen. Auch innerhalb einer dachförmigen Anordnung können die beiden Photovoltaikelemente 81 beweglich aneinander anschlie-ßen, so dass - um bei dem erwähnten Beispiel eines Satteldaches zu bleiben - der First des Daches wie ein Scharnier für die beiden aneinander anschließenden Dachflächen bzw. Photovoltaikelemente 81 wirkt.

Auch bei dem Ausführungsbeispiel der Fig. 9 sind außen umlaufend die Streifen 72 und die Verbindungselemente 73 angeordnet, so dass die dargestellte schwimmende Photovoltaikanlage mit mehreren gleichartigen Photovoltaikanlagen zu einer größeren Insel verbunden werden kann.

Bei dem Ausführungsbeispiel der Fig. 8 sind die einzelnen Photovoltaikelemente 81 ebenfalls paarweise wie die Dachflächen eines Satteldachs angeordnet. Die Firstlinie eines solchen Daches verläuft in Längsrichtung der Schwimmer, und die Streben 82 des Gestells bewirken eine Eigensteifigkeit der gesamten dargestellten Photovoltaikanlage, so dass Verformungen auf ein Mindestmaß beschränkt sind und die einzelnen Photovoltaikelemente 81 nicht beschädigt werden. Im Unterschied dazu verlaufen beim Ausführungsbeispiel der Fig. 9 die Firstlinien quer zur Längsrichtung der Photovoltaikanlage bzw. deren Schwimmer, so dass sich die Schwimmer über ihre Länge nach oben oder nach unten biegen können und somit den Wellenbewegungen folgen können. Dadurch, dass die First Linien der Dachanordnungen quer dazu verlaufen, wird die erwähnte Scharnierbeweglichkeit zwischen den einzelnen Photovoltaikelemente 81, oder zumindest zwischen zwei benachbarten Dachanordnungen ermöglicht, so dass auch in diesem Fall die starren Photovoltaikelemente 81 nicht unzuträglich verformt und dadurch beschädigt werden können.

Die Erfindung betrifft auch ein Verfahren zur Herstellung einer schwimmenden Photovoltaikanlage, wie oben beschrieben, einschließlich der folgenden Schritte:
- Bereitstellung einer ersten Schicht eines ersten Schaumstoffs;
- Bereitstellung einer zweiten Schicht eines zweiten Schaumstoffs,
- Anordnen einer Oberfläche der zweiten Schicht auf einer Oberfläche der ersten Schicht, um einen Stapel von Schichten zu erhalten,
- die Bereitstellung einer Wickelfolie,
- die Wickelfolie um den Stapel führen, so dass die Oberflächen der ersten und zweiten Schicht miteinander befestigt sind,
- wobei die erste Schicht aus einem durchlässigen Schaumstoff Wasser aufnehmen kann;
- und die zweite Schicht aus einem nicht durchlässigen Schaumstoff besteht, der für Wasser undurchlässig ausgebildet ist.

Das Verfahren erzeugt einen Schwimmer in einer Weise, dass während der Verwendung im Wasser die erste Schicht als eine untere Schicht des Schichtstapels teilweise in das Wasser getaucht sein wird, die zweite Schicht ist eine obere Schicht des Schichtstapels, die hauptsächlich über der Wasseroberfläche schwimmt.

Gemäß einer Ausführungsform umfasst das Verfahren ferner die Anwendung eines Photovoltaikmoduls auf einer freien Oberfläche der zweiten Schicht, auf der von der ersten Schicht abgewandten Seite, wobei das Photovoltaikmodul mit der Folienschicht verbunden ist, die sich über die freie Oberfläche erstreckt.

Nach einer weiteren Ausführungsform ist die Folienschicht Teil der Wickelfolie, oder die Folienschicht ist eine Trägerfolie, die in einem Verfahrensschritt auf die Wickelfolie angebracht wird, bevor das Photovoltaikmodul auf die freie Oberfläche gebracht wird.

Die Erfindung wurde auf der Grundlage einiger Ausführungsformen beschrieben. Deutliche Änderungen und Änderungen werden für den Fachmann erkennbar werden, wenn er die vorangehende detaillierte Beschreibung liest und versteht. Die Erfindung ist dahin auszulegen, dass sie alle diese deutlichen Änderungen und Änderungen umfasst, soweit sie in den Umfang der beigefügten Ansprüche fallen.

### Bezugszeichen:

- 3 a,b,c,...: Folienhüllen
4 a Weitere Schicht des Wickelfilms 23
- 4 b, c, d...: Folienhülle des Wickelfilms
10 Photovoltaikanlage
20 Meeresboden
21 flexibles Photovoltaikmodul
22 Trägerfolie
23 Wickelfolie
24 obere Schicht
25 untere Schicht
26 Schwimmer
30 Spindel
31 Bei ... (Stelle der Spannung)
32 Oberseite
40 Stromkabel
50 Wasseroberfläche
51 Unterseite
52 bei ... (durchhängende weitere Schicht 4a)
60 Ankerleine
61 Endfolie
71 Dünnschicht-PV-Element
72 Streifen (Häkchenverschluss)
73 gepunktete Linien (Haken- und / oder Lippenverbindungen, Kabelverbindungen und dergleichen)
74 Schwimmer
75 Wickelfolie
81 starres Photovoltaikelement
82 Strebe
100 Insel

## Patentansprüche

1. Schwimmende Photovoltaikanlage (10) mit einem Schwimmer (26, 74) und mindestens einem Photovoltaikmodul (21);
wobei der Schwimmer (26, 74) mit einer oberen Oberfläche ausgestattet ist;
das Photovoltaikmodul (21) in einer vorgegebenen Position auf der oberen Oberfläche angeordnet ist,
**dadurch gekennzeichnet,**
**dass** der Schwimmer (26, 74) als Schichtstapel aufgebaut ist,
wobei der Schichtstapel mindestens eine obere Schicht (24) und eine untere Schicht (25) umfasst;
eine erste Fläche der oberen Schicht (24) an einer zweiten Fläche der unteren Schicht (25) befestigt ist;
die untere Schicht (25) aus einem durchlässigen Schaumstoff besteht, der Wasser aufnehmen kann;
die obere Schicht (24) aus nicht durchlässigen Schaumstoffen hergestellt und für Wasser undurchlässig konfiguriert ist.

2. Anlage nach Anspruch 1,
**dadurch gekennzeichnet,**
**dass** das durchlässige Schaumstoffmaterial aus einer Gruppe von Kunststoffschaummaterialien mit offener Zellstruktur einschließlich Polyurethanschaum mit offener Zellstruktur und Latexschaumkautschuk ausgewählt ist.

3. Anlage nach Anspruch 1 oder 2,
**dadurch gekennzeichnet,**
**dass** das nicht durchlässige Schaummaterial aus einer Gruppe von Kunststoffschaummaterialien mit geschlossener Zellstruktur einschließlich Polyurethanschaum mit geschlossener Zellstruktur, expandiertem Polystyrol, Polyethylenschaum, Polypropylenschaum, Neoprenkautschuk ausgewählt ist.

4. Anlage nach einem der Ansprüche 1 bis 3,
**dadurch gekennzeichnet,**
**dass** der durchlässige Schaumstoff eine Luftdurchlässigkeit von wenigstens 4000 l/m² und/oder eine Porengröße zwischen 0,25 und 2 mm und/oder eine spezifische Dichte zwischen 10 und 40 kg/m³ aufweist

5. Anlage nach einem der vorstehenden Ansprüche,
**gekennzeichnet durch**
eine Trägerfolie (22), die zwischen der Oberseite (32) des Schwimmers (26, 74) und dem mindestens einem Photovoltaikmodul (21) aufgebracht wird.

6. Anlage nach einer der vorherigen Ansprüche,
**gekennzeichnet durch** eine Schicht (4a) einer Wickelfolie (23), die um den Schichtstapel in einer Längsrichtung des Schwimmers (26, 74) gewickelt ist.

7. Anlage nach Anspruch 6,
**dadurch gekennzeichnet,**
**dass** die Wickelfolie (23) aus einem Kunststoff besteht, der aus einer Gruppe ausgewählt wurde, die Polyvinylchlorid- und Ethylvinylacetat umfasst.

8. Anlage nach einem der Ansprüche 1 bis 6,
**dadurch gekennzeichnet,**
**dass** der Schichtstapel mit einer oder mehreren Folienhüllen (3a, 3b, 3c, 4b, 4c, 4d) umwickelt ist.

9. Anlage nach Anspruch 8,
**dadurch gekennzeichnet,**
**dass** der Schichtstapel durch eine Reihe von Folienhüllen (3a, 3b, 3c, 4b, 4c, 4d) umwickelt wird, deren Kanten sich teilweise überlappen.

10. Anlage nach einem der Ansprüche 6 bis 9,
**dadurch gekennzeichnet,**
**dass** die Schicht (4a) der Wickelfolie (23) oder eine oder mehrere Folienhüllen (3a, 3b, 3c, 4b, 4c, 4d) mindestens an den Enden des Schwimmers (26, 74) versiegelt sind.

11. Anlage nach einem der vorherigen Ansprüche 6 bis 10,
**dadurch gekennzeichnet,**
**dass** die Schicht (4a) der Wickelfolie (23) oder die Folienhüllen (3a, 3b, 3c, 4b, 4c, 4d) die Trägerfolie (22) enthalten.

12. Anlage nach Anspruch 5,
**dadurch gekennzeichnet,**
**dass** das Photovoltaikmodul (21) entweder ein Solarpanel mit Solarzellen auf Basis von Halbleitersubstrat enthält oder ein Solarpanel auf Basis von Dünnschicht-Photovoltaikelementen (71).

13. Anlage nach Anspruch 12,
**dadurch gekennzeichnet,**
**dass** das Solarpanel durch eine flexible Kupplung an der Trägerfolie (22) befestigt ist.

14. Anlage nach einem der Ansprüche 1 bis 13,
**dadurch gekennzeichnet,**
**dass** am Umfang des Schwimmers (26, 74) eine oder mehrere flexible Kupplungen angeordnet sind.

15. Anlage nach Anspruch 14 und einem der Ansprüche 6 oder 8,
**dadurch gekennzeichnet,**
**dass** eine oder mehrere flexible Kupplungen auf der Schicht (4a) der Wickelfolie (23) oder einer oder mehreren Folienhüllen (3a, 3b, 3c, 4b, 4c, 4d) angebracht sind.

16. Anlage nach einem der vorhergehenden Ansprüche,
**dadurch gekennzeichnet,**
**dass** auf den Schwimmern (26, 74) ein Gestell angeordnet ist, welches mehrere Streben (82) aufweist, und auf welchem Photovoltaikelemente (81) angeordnet sind.

17. Anlage nach Anspruch 16,
**dadurch gekennzeichnet,**
**dass** auf dem Gestell starre Photovoltaikelemente (81) angeordnet sind.

## Claims

1. Floating photovoltaic system (10) with a float (26, 74) and at least one photovoltaic module (21),
where the float (26, 74) has an upper surface,
the photovoltaic module (21) is placed in a predetermined position on the upper surface, **characterised in that**
the float (26, 74) is constructed as layer stack,
where the layer stack comprises at least an upper layer (24) and a lower layer (25),
where a first surface of the upper layer (24) is attached to a second surface of the lower layer (25),
where the lower layer (25) consists of a water-permeable foam that is water-absorbent,
where the upper layer (24) is made of non-permeable foams and is configured to be impermeable to water.

2. System in accordance with claim 1, **characterised in**
**that** the permeable foam material is selected from a group of open-cell plastic foam materials including open-cell polyurethane foam and latex foam rubber.

3. System in accordance with claim 1 or 2, **characterised in**
**that** the non-permeable foam material is selected from a group of plastic foam materials having a closed-cell structure, including polyurethane foam with a closed-cell structure, expanded polystyrene, polyethylene foam, polypropylene foam, neoprene rubber.

4. System in accordance with any one of claims 1 to 3, **characterised in**
**that** the permeable foam has an air permeability of at least 4000 l/m² and/or a pore size between 0.25 and 2 mm and/or a specific density between 10 and 40 kg/m³.

5. System in accordance with any one of the preceding claims, **characterised by** a carrier film (22) that is applied between the upper face (32) of the float (26, 74) and the at least one photovoltaic module (21).

6. System according to any one of the preceding claims, **characterised by** a layer (4a) of a film wrapper (23) which is wrapped around the layer stack in a longitudinal direction of the float (26, 74).

7. System in accordance with claim 6, **characterised in**
**that** the film wrapper (23) consists of a plastic selected from a group that includes polyvinyl chloride and ethyl vinyl acetate.

8. System in accordance with any one of claims 1 to 6, **characterised in**
**that** the layer stack is wrapped with one or more film sleeves (3a, 3b, 3c, 4b, 4c, 4d).

9. System in accordance with claim 8, **characterised in**
**that** the layer stack is wrapped by a series of film sleeves (3a, 3b, 3c, 4b, 4c, 4d) whose edges partially overlap.

10. System in accordance with any one of claims 6 to 9, **characterised in**
**that** the layer (4a) of the film wrapper (23) or one or more film sleeves (3a, 3b, 3c, 4b, 4c, 4d) is or are sealed at least at the ends of the float (26, 74).

11. System in accordance with any one of the preceding claims 6 to 10, **characterised in**
**that** the layer (4a) of the film wrapper (23) or the film sleeves (3a, 3b, 3c, 4b, 4c, 4d) contains or contain the carrier film (22).

12. System in accordance with claim 5, **characterised in**
**that** the photovoltaic module (21) contains either a solar panel with solar cells based on semiconductor substrate, or a solar panel based on thin-film photovoltaic elements (71).

13. System in accordance with claim 12, **characterised in**
**that** the solar panel is attached to the carrier film (22) by a flexible coupling.

14. System in accordance with any one of claims 1 to 13, **characterised in that** one or more flexible couplings is or are arranged on the circumference of the float (26, 74).

15. System in accordance with claim 14 and any one of claims 6 or 8, **characterised in**
**that** one or more flexible couplings is or are attached to the layer (4a) of the film wrapper (23) or one or more film sleeves (3a, 3b, 3c, 4b, 4c, 4d).

16. System according to any one of the preceding claims, **characterised in**
**that** a rack is arranged on the floats (26, 74), which has a plurality of struts (82) and on which photovoltaic elements (81) are arranged.

17. System in accordance with claim 16, **characterised in**
**that** rigid photovoltaic elements (81) are arranged on the rack.

## Revendications

1. Système photovoltaïque flottant (10) comprenant un flotteur (26, 74) et au moins un panneau photovoltaïque (21),
sachant que le flotteur (26, 74) est équipé d'une surface supérieure,
sachant que le panneau photovoltaïque (21) est disposé sur la surface supérieure dans une position spécifiée, **caractérisé en ce que** le flotteur (26, 74) est constitué par un empilement de couches,
sachant que l'empilement de couches comprend au moins une couche supérieure (24) et une couche inférieure (25),
sachant qu'une première surface de la couche supérieure (24) est fixée contre une deuxième surface de la couche inférieure (25),
sachant que la couche inférieure (25) se compose d'un matériau mousse perméable capable d'absorber l'eau,
sachant que la couche supérieure (24) se compose de matériaux mousses non perméables et qu'elle est configurée imperméable à l'eau.

2. Système selon la revendication 1, **caractérisé en ce**
**que** le matériau mousse perméable a été sélectionné dans un groupe de matériaux mousses synthétiques à structure cellulaire ouverte, y compris de la mousse de polyuréthane à structure cellulaire ouverte, et du caoutchouc mousse en latex.

3. Système selon la revendication 1 ou 2, **caractérisé en ce**
**que** le matériau mousse non perméable a été sélectionné dans un groupe de matériaux mousses synthétiques à structure cellulaire fermée, y compris de la mousse de polyuréthane à structure cellulaire fermée, du polystyrène expansé, de la mousse de polyéthylène, de la mousse polypropylène, du caoutchouc néoprène.

4. Système selon l'une quelconque des revendications 1 à 3, **caractérisé en ce que** le matériau mousse perméable présente une perméabilité à l'air d'au moins 4000 l/m² et/ou une taille de pores comprise entre 0,25 et 2 mm et/ou une densité spécifique comprise entre 10 et 40 kg/m³.

5. Système selon l'une quelconque des revendications précédentes **caractérisé par** un film porteur (22) monté entre la surface supérieure (32) du flotteur (26, 74) et au moins un panneau photovoltaïque (21).

6. Système selon l'une quelconque des revendications précédentes, **caractérisé par** une couche (4a) d'un film enveloppant (23), qui est enroulée autour de l'empilement de couches dans un sens longitudinal du flotteur (26, 74).

7. Système selon la revendication 6, **caractérisé en ce**
**que** le film enveloppant (23) se compose d'un plastique sélectionné dans un groupe comprenant le chlorure de polyvinyle acétate et l'éthylène vinyle acétate.

8. Système selon l'une quelconque des revendications 1 à 6, **caractérisé en ce que** l'empilement de couches est enveloppé dans une ou plusieurs enveloppes en film (3a, 3b, 3c, 4b, 4c, 4d).

9. Système selon la revendication 8, **caractérisé en ce**
**que** l'empilement de couches est enveloppé dans une série d'enveloppes en film (3a, 3b, 3c, 4b, 4c, 4d), dont les bords se chevauchent en partie.

10. Système selon l'une quelconque des revendications 6 à 9, **caractérisé en ce que** la couche (4a) du film enveloppant (23) ou une ou plusieurs enveloppes en film (3a, 3b, 3c, 4b, 4c, 4d) est ou sont scellée(s) au moins aux extrémités du flotteur (26, 74).

11. Système selon l'une quelconque des revendications 6 à 10, **caractérisé en ce que** la couche (4a) du film enveloppant (23) ou les enveloppes en film (3a, 3b, 3c, 4b, 4c, 4d) contient ou contiennent le film porteur (22).

12. Système selon la revendication 5, **caractérisé en ce**
**que** le panneau photovoltaïque (21) contient soit un panneau solaire avec cellules solaires sur la base d'un support semi-conducteur, soit un panneau solaire sur la base d'éléments photovoltaïques (71) à couche mince.

13. Système selon la revendication 12, **caractérisé en ce**
**que** le panneau solaire est fixé par un accouplement flexible contre le film porteur (22).

14. Système selon l'une quelconque des revendications 1 à 13, **caractérisé en ce que** sur la périphérie du flotteur (26, 74), est ou sont disposé(s) un ou plusieurs accouplements flexibles.

15. Système selon la revendication 14 ou selon l'une quelconque des revendications 6 ou 8, **caractérisé en ce**
**qu'**un ou plusieurs accouplements flexibles est ou ont été monté(s) sur la couche (4a) du film enveloppant (23) ou une ou plusieurs enveloppes en film (3a, 3b, 3c, 4b, 4c, 4d).

16. Système selon l'une quelconque des revendications précédentes, **caractérisé en ce**
**que** sur les flotteurs (26, 74) est disposé un châssis présentant plusieurs renforts (82) et sur lequel sont disposés des éléments photovoltaïques (81).

17. Système selon la revendication 16, **caractérisé en ce**
**que** sur le châssis sont disposés des éléments photovoltaïques (81) rigides.
